# EUROPÄISCHE PATENTSCHRIFT

(11) **EP 4 612 457 B1**
(45) Veröffentlichungstag und Bekanntmachung des Hinweises auf die Patenterteilung: **07.10.2026**
(21) Anmeldenummer: 23790003.0
(22) Anmeldetag: 13.10.2023
(51) Int. Cl.: G01C 21/16, G01C 25/00

(54) **VERFAHREN ZUR ERMITTLUNG EINER FEHLORIENTIERUNG EINER INERTIALMESSEINHEIT EINES FAHRZEUGS UND FAHRZEUG MIT EINER INERTIALMESSEINHEIT**
METHOD FOR DETERMINING A MISALIGNMENT OF AN INERTIAL MEASUREMENT UNIT OF A VEHICLE, AND VEHICLE COMPRISING AN INERTIAL MEASUREMENT UNIT
PROCÉDÉ DE DÉTERMINATION D'UN DÉFAUT D'ALIGNEMENT D'UNE UNITÉ DE MESURE INERTIELLE D'UN VÉHICULE ET VÉHICULE COMPRENANT UNE UNITÉ DE MESURE INERTIELLE

(30) Priorität: 01.11.2022 DE 102022128870
(43) Veröffentlichungstag der Anmeldung: 10.09.2025
(73) Patentinhaber: Mercedes-Benz Group AG, 70372 Stuttgart (DE); Marelli Germany GmbH, 72760 Reutlingen (DE)
(72) Erfinder: YARGELDI, Sinan, 72581 Dettingen (DE); NELSON, Anton, 72119 Ammerbuch (DE); BACCARIN, Davide, 72762 Reutlingen (DE)
(74) Vertreter: Liedtke & Partner Patentanwälte
(86) Internationale Anmeldenummer: PCT/EP2023/078504
(87) Internationale Veröffentlichungsnummer: WO 2024/094409

(56) Entgegenhaltungen:
- WO-A1-2017/129199
- VINANDE E ET AL: "Mounting-Angle Estimation for Personal Navigation Devices", IEEE TRANSACTIONS ON VEHICULAR TECHNOLOGY, IEEE, USA, vol. 59, no. 3, 1 March 2010 (2010-03-01), pages 1129 - 1138, XP011296528, ISSN: 0018-9545

## Beschreibung

Die Erfindung betrifft ein Verfahren zur Ermittlung einer Fehlorientierung einer Inertialmesseinheit eines Fahrzeugs nach den Merkmalen des Oberbegriffs des Anspruchs 1 und ein Fahrzeug.

Aus dem Stand der Technik ist, wie in der DE 10 2005 033 237 A1 beschrieben, ein Verfahren zur Bestimmung und Korrektur von Fehlorientierungen und Offsets der Sensoren einer Inertial Measurement Unit in einem Landfahrzeug bekannt. Die Inertial Measurement Unit enthält drei lineare Beschleunigungssensoren und drei Drehratensensoren. Für die Sensoren gibt es gewünschte Einbaurichtungen parallel zu den Koordinatenachsen eines fahrzeugfesten kartesischen Koordinatensystems. Die wirklichen Einbaurichtungen der Sensoren können auf Grund von Fehlerorientierungen von den gewünschten Einbaurichtungen abweichen. Durch Vergleich von durch die linearen Beschleunigungssensoren gemessenen Beschleunigungen bei unterschiedlichen Aufstellungen des Fahrzeugs mit für diese unterschiedlichen Aufstellungen bekannten Werten der Beschleunigung im fahrzeugfesten kartesischen Koordinatensystem werden die wirklichen Einbaurichtungen der linearen Beschleunigungssensoren bestimmt. Mit Hilfe einer Koordinaten-Transformation können dann die gemessenen Beschleunigungen in die wirklichen Beschleunigungen umgerechnet werden.

Ein Verfahren zur Ermittlung einer Fehlorientierung einer Inertialmesseinheit eines Fahzeugs gemäß dem Oberbegriff des Anspruchs 1 ist zudem in VINANDE E ET AL: "Mounting-Angle Estimation for Personal Navigation Devices", IEEE TRANSACTIONS ON VEHICULAR TECHNOLOGY, IEEE, USA, Bd. 59, Nr. 3, Seiten 1129-1138, offenbart.

Das Dokument WO 2017/129199 A1 offenbart ein Verfahren zur Bestimmung eines Kippzustands eines Fahrzeugs, bei dem es sich um einen Nickzustand oder einen Wankzustand handeln kann, basierend auf einem Kippmodell, wobei das Kippmodell eine auf mindestens einem Modellparameter basierende Funktion des Kippwinkels in Abhängigkeit einer gemessenen Fahrzustandsgröße darstellt.

Der Erfindung liegt die Aufgabe zu Grunde, ein gegenüber dem Stand der Technik verbessertes Verfahren zur Ermittlung einer Fehlorientierung einer Inertialmesseinheit eines Fahrzeugs und ein gegenüber dem Stand der Technik verbessertes Fahrzeug anzugeben.

Die Aufgabe wird erfindungsgemäß gelöst durch ein Verfahren zur Ermittlung einer Fehlorientierung einer Inertialmesseinheit eines Fahrzeugs mit den Merkmalen des Anspruchs 1 und ein Fahrzeug mit den Merkmalen des Anspruchs 6.

Vorteilhafte Ausgestaltungen der Erfindung sind Gegenstand der Unteransprüche.

In einem Verfahren zur Ermittlung einer Fehlorientierung einer, insbesondere zur Messung einer Beschleunigung eines Fahrzeugs vorgesehenen, Inertialmesseinheit des Fahrzeugs, mittels welcher dreidimensionale Komponenten der Beschleunigung des Fahrzeugs in einem Sensorkoordinatensystem gemessen werden, ist vorgesehen, dass für das Fahrzeug ein Fahrzeugkoordinatensystem vorgegeben ist, welches eine auch als Wankachse bezeichnete x-Achse in Fahrzeuglängsrichtung, eine auch als Nickachse bezeichnete y-Achse in Fahrzeugquerrichtung und eine auch als Gierachse bezeichnete z-Achse in Fahrzeughochrichtung aufweist. Im Verfahren wird eine Fehlorientierung einer zwischen einer x-Achse und einer y-Achse des Sensorkoordinatensystems aufgespannten Ebene gegenüber einer zwischen der x-Achse und der y-Achse des Fahrzeugkoordinatensystems aufgespannten Ebene ermittelt, d. h. es wird die Fehlorientierung des Sensorkoordinatensystems gegenüber der Wankachse, also der x-Achse und gegenüber der Nickachse, also der y-Achse, des Fahrzeugkoordinatensystems ermittelt.

Erfindungsgemäß erfolgt die Ermittlung der Fehlorientierung während der Fahrt, d. h. während eines Fahrbetriebs des Fahrzeugs, iterativ in mehreren Iterationsstufen. Die jeweilige Iterationsstufe erhält dabei als Input, d. h. als Eingangswerte:
- von der Inertialmesseinheit ermittelte aktuelle Messwerte, insbesondere Messwerte einer Längsbeschleunigung und einer Querbeschleunigung des Fahrzeugs,
- die Erdbeschleunigung,
- zur Berechnung von Inertialkräften, insbesondere einer Corioliskraft, einer Zentripetalkraft und/oder einer Eulerkraft, erforderliche Zustandsdaten des Fahrzeugs, insbesondere eine Drehgeschwindigkeit des Fahrzeugs, eine Drehrate des Fahrzeugs, eine Geschwindigkeit des Fahrzeugs und/oder Raddrehzahlen von Rädern des Fahrzeugs, und
- Koeffizienten von vorgegebenen Polynomen, die jeweils einen approximierten Zusammenhang zwischen der gemessenen Längsbeschleunigung und einem Nickwinkel des Fahrzeugs bzw. zwischen der gemessenen Querbeschleunigung und einem Wankwinkel des Fahrzeugs wiedergeben, d. h. das eine Polynom gibt einen approximierten Zusammenhang zwischen der gemessenen Längsbeschleunigung und dem Nickwinkel des Fahrzeugs wieder und das andere Polynom gibt einen approximierten Zusammenhang zwischen der gemessenen Querbeschleunigung und dem Wankwinkel des Fahrzeugs wieder. Die vorgegebenen Polynome sind insbesondere Polynome erster oder zweiter Ordnung. Insbesondere handelt es sich bei diesen Koeffizienten um Parameter, die, ausgehend von vorgegebenen Startwerten, in den einzelnen Iterationsstufen iterativ verfeinert werden.

Die Erdbeschleunigung wird insbesondere mittels der anderen oben genannten Inputs berechnet, zum Beispiel durch einen Kalmanfilter.

In der jeweiligen Iterationsstufe werden die Inertialkräfte, insbesondere die Corioliskraft, die Zentripetalkraft und/oder die Eulerkraft, berechnet und die Messwerte der Längsbeschleunigung und Querbeschleunigung von Beiträgen, die von der Erdbeschleunigung und von den Inertialkräften stammen, d. h. von diesen verursacht werden, bereinigt. Des Weiteren werden in der jeweiligen Iterationsstufe die Koeffizienten der Polynome mit den bereinigten Messwerten der Längsbeschleunigung und Querbeschleunigung aktualisiert.

In der jeweiligen Iterationsstufe wird geprüft, ob die Koeffizienten nullter Ordnung der Polynome jeweils ein vorgegebenes Konvergenzkriterium erfüllen.

Wenn die Koeffizienten nullter Ordnung der Polynome das jeweilige vorgegebene Konvergenzkriterium nicht erfüllen, werden die Koeffizienten der Polynome an die nächste Iterationsstufe ausgegeben und dort als Eingangswerte verwendet.

Andernfalls, d. h., wenn die Koeffizienten nullter Ordnung der Polynome das jeweilige vorgegebene Konvergenzkriterium erfüllen, werden die Iterationen beendet, d. h. es werden keine weiteren Iterationsstufen durchgeführt.

Bei Beendigung der Iterationen werden die Koeffizienten nullter Ordnung der Polynome als Ergebnisse der ermittelten Fehlorientierung des Sensorkoordinatensystems ausgegeben, d. h. als Ergebnisse der ermittelten Fehlorientierung der zwischen der x-Achse und der y-Achse des Sensorkoordinatensystems aufgespannten Ebene gegenüber der zwischen der x-Achse und der y-Achse des Fahrzeugkoordinatensystems aufgespannten Ebene, d. h. als Ergebnisse der ermittelten Fehlorientierung des Sensorkoordinatensystems gegenüber der Wankachse, also der x-Achse und gegenüber der Nickachse, also der y-Achse, des Fahrzeugkoordinatensytems. Die Koeffizienten nullter Ordnung entsprechen einem statischen Nickwinkel bzw. einem statischen Wankwinkel und stellen die Fehlorientierung des Sensorkoordinatensystems gegenüber der Nickachse, d. h. der y-Achse, bzw. der Wankachse, d. h. der x-Achse, des Fahrzeugkoordinatensystems dar. D. h. der Koeffizient nullter Ordnung des einen Polynoms entspricht dem statischen Nickwinkel und stellt die Fehlorientierung des Sensorkoordinatensystems gegenüber der Nickachse des Fahrzeugkoordinatensystems dar und der Koeffizient nullter Ordnung des anderen Polynoms entspricht dem statischen Wankwinkel und stellt die Fehlorientierung des Sensorkoordinatensystems gegenüber der Wankachse des Fahrzeugkoordinatensystems dar.

Ursachen für diese Fehlorientierung des Sensorkoordinatensystem der Inertialmesseinheit gegenüber dem vorgegebenen Fahrzeugkoordinatensystem können beispielsweise Einbautoleranzen eines Einbaus der Inertialmesseinheit in das Fahrzeug und/oder Herstellungstoleranzen der Inertialmesseinheit sein.

In einer möglichen Ausführungsform des Verfahrens ist vorgesehen, dass mit den Ergebnissen der ermittelten Fehlorientierung des Sensorkoordinatensystems (statischer Nickwinkel und statischer Wankwinkel) eine Koordinatentransformationsmatrix erstellt wird, mit der die im Sensorkoordinatensystem ermittelten dreidimensionalen Komponenten der Beschleunigung in das Fahrzeugkoordinatensystem umgerechnet werden oder werden können. Auf diese Weise wird die Inertialmesseinheit kalibriert, d. h. Messfehler, die durch die Fehlorientierung des Sensorkoordinatensystems bedingt sind, werden kompensiert. Diese Ausführungsform des Verfahrens ist somit insbesondere ein Verfahren zur Kalibrierung der Inertialmesseinheit des Fahrzeugs.

Mittels des beschriebenen Verfahrens werden nur die Fehlorientierungen gegenüber der Wankachse und Nickachse ermittelt. Die Fehlorientierung gegenüber der Gierachse wird nicht ermittelt. Bei Bedarf kann sie, insbesondere nachträglich, mit einem anderen Verfahren ermittelt werden. Durch die Kalibrierung wird somit nur die Fehlorientierung der Inertialmesseinheit relativ zur Wankachse und Nickachse des Fahrzeugs korrigiert. Dies ist jedoch für einige Anwendungen, beispielsweise für eine Leuchtweitenregelung von Fahrzeugscheinwerfern des Fahrzeugs, bereits ausreichend, denn für diese Leuchtweitenregelung ist es ausreichend, dass die x-y-Ebene des Sensorkoordinatensystems, d. h. die zwischen der x-Achse und der y-Achse des Sensorkoordinatensystems aufgespannte Ebene, parallel zur x-y-Ebene des Fahrzeugkoordinatensystems, d. h. parallel zur zwischen der x-Achse und der y-Achse des Fahrzeugkoordinatensystems aufgespannten Ebene, ausgerichtet ist. Für die Leuchtweitenregulierung ist es insbesondere wichtig, dass die Fahrzeugscheinwerfer nicht zu tief und nicht zu hoch strahlen. Dies wird durch die beschriebene Lösung sichergestellt. Eine Verdrehung des Sensorkoordinatensystems gegenüber dem Fahrzeugkoordinatensystem um die Gierachse ist für die Leuchtweitenregulierung irrelevant, da es für die Leuchtweitenregulierung nicht relevant ist, ob die Fahrzeugscheinwerfer zu weit nach links oder rechts strahlen.

Die beschriebene Lösung ermöglicht insbesondere eine automatische Selbstkalibrierung der Inertialmesseinheit.

Die Inertialmesseinheit kann im Fahrzeug für zahlreiche Funktionen verwendet werden, beispielweise für die bereits erwähnte Leuchtweitenregulierung, eine Airbagsteuerung, ein elektronisches Stabilitätsprogramm ESP, Dead Reckoning, d. h. Koppelnavigation, und/oder für eine Ego-Motion-Schätzung, d. h. eine Schätzung der Bewegung des Fahrzeugs. Für diese Anwendungen ist eine möglichst korrekte Orientierung der Inertialmesseinheit, insbesondere von deren Sensorkoordinatensystem, zum Fahrzeugkoordinatensystem wichtig. Bei der Herstellung der Inertialmesseinheit und deren Einbau in das Fahrzeugs wird daher darauf geachtet, eine Fehlerkette aus einer Positionierung von Sensoren, insbesondere Beschleunigungssensoren, auf einer Platine der Inertialmesseinheit, einer Positionierung der Platine in einem Gehäuse der Inertialmesseinheit, einer Anbringung der Inertialmesseinheit an einer Karosserie des Fahrzeugs und Karosseriedeformationen auf einem Minimum zu halten. Dennoch ergibt sich hierbei bisher eine Fehlstellung, d. h. eine Fehlorientierung der Inertialmesseinheit, von +-3°. Das beschriebene Verfahren ermöglicht die einfache und automatische Kalibrierung der bereits im Fahrzeug verbauten Inertialmesseinheit. Dabei sind für das beschriebene Verfahren keine zusätzlichen Hardwarekomponenten erforderlich. Des Weiteren sind für das beschriebene Verfahren auch keine zusätzlichen Bearbeitungsschritte an einem Herstellungsband während einer Herstellung des Fahrzeugs erforderlich. Das Verfahren ermöglicht eine wesentlich bessere Kalibrierung und somit wesentlich höhere Genauigkeiten, insbesondere ist ein Sensoroffset unerheblich für die Kalibrierungsgenauigkeit.

Ein erfindungsgemäßes Fahrzeug weist die Inertialmesseinheit und eine Vorrichtung auf, die ausgebildet und eingerichtet ist zur Durchführung des Verfahrens. Für das erfindungsgemäße Fahrzeug ergeben sich somit die gleichen Vorteile wie für das oben beschriebene Verfahren.

In einer möglichen Ausführungsform ist die Vorrichtung oder zumindest eine Verarbeitungseinheit der Vorrichtung ein Bestandteil der Inertialmesseinheit. Dadurch wird insbesondere die oben bereits erwähnte automatische Selbstkalibrierung der Inertialmesseinheit ermöglicht. Die Verarbeitungseinheit der Vorrichtung ist insbesondere ausgebildet und eingerichtet zur Durchführung der oben beschriebenen Verarbeitungen, insbesondere Berechnungen und Ermittlungen.

In einer möglichen Ausführungsform weist die Vorrichtung Sensoren zur Ermittlung der Erdbeschleunigung und/oder der zur Berechnung der Inertialkräfte erforderlichen Zustandsdaten des Fahrzeugs auf. Beispielsweise ist der jeweilige Sensor ein bereits für andere Verwendungszwecke im Fahrzeug verbauter Sensor. In dieser Ausführungsform weist die Vorrichtung somit insbesondere die Sensoren und die Verarbeitungseinheit auf, wobei die Sensoren der Verarbeitungseinheit entsprechende Sensordaten bereitstellen, welche in der Verarbeitungseinheit in dem oben beschriebenen Verfahren auf die beschriebene Weise verarbeitet werden.

Ausführungsbeispiele der Erfindung werden im Folgenden anhand von Zeichnungen näher erläutert.

Dabei zeigen:
- Fig. 1: schematisch ein Fahrzeug mit einer Inertialmesseinheit, und
- Fig. 2: schematisch einen Ablauf eines Verfahrens zur Ermittlung einer Fehlorientierung der Inertialmesseinheit des Fahrzeugs.

Einander entsprechende Teile sind in allen Figuren mit den gleichen Bezugszeichen versehen.

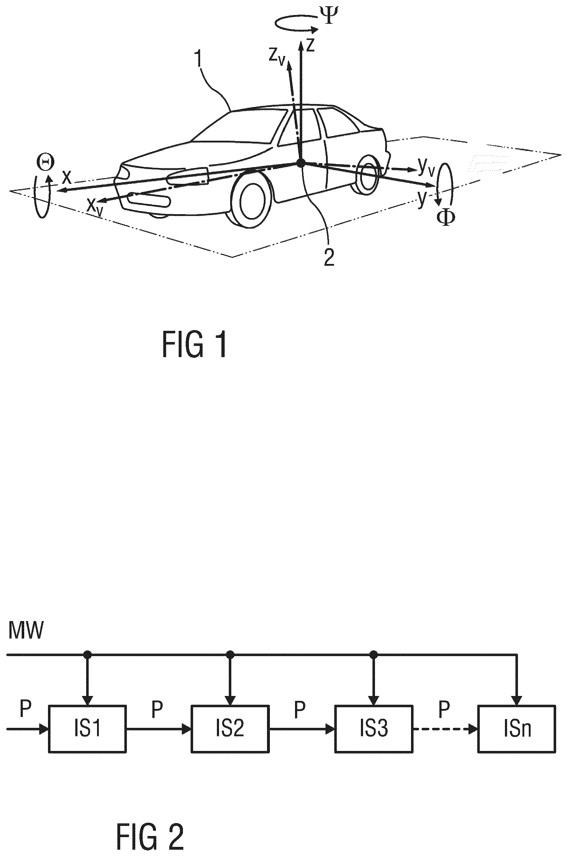

Figur 1 zeigt eine schematische Darstellung eines Fahrzeugs 1 mit einer Inertialmesseinheit 2, auch als IMU (Inertial Measurement Unit), Beschleunigungssensor oder Beschleunigungssensoreinheit bezeichnet. Die Inertialmesseinheit 2 ist insbesondere zur Messung einer Beschleunigung des Fahrzeugs 1 vorgesehenen. Das Fahrzeug 1 weist des Weiteren eine Vorrichtung auf, die ausgebildet und eingerichtet ist zur Durchführung eines Verfahrens zur Ermittlung einer Fehlorientierung der Inertialmesseinheit 2. Diese Vorrichtung oder zumindest eine Verarbeitungseinheit der Vorrichtung ist beispielsweise ein Bestandteil der Inertialmesseinheit 2.

Figur 2 zeigt eine schematische Darstellung eines Ablaufs des Verfahrens zur Ermittlung der Fehlorientierung der Inertialmesseinheit 2.

Mit der Inertialmesseinheit 2 sollen dreidimensionale Komponenten der Beschleunigung des Fahrzeugs 1 in einem fahrzeugfest vorgegebenen Fahrzeugkoordinatensystem ermittelt werden. Dies wird beispielsweise für verschiedene Fahrzeugfunktionen benötigt, zum Beispiel für eine ABS-Funktion (ABS=Antiblockiersystem), ESP-Funktion (ESP=Elektronisches Stabilitätsprogramm) und/oder Leuchtweitenregulierung.

Das vorgegebene Fahrzeugkoordinatensystem weist, wie in Figur 1 gezeigt, eine auch als Wankachse X_{V} bezeichnete x-Achse in Fahrzeuglängsrichtung, eine auch als Nickachse Y_{V} bezeichnete y-Achse in Fahrzeugquerrichtung und eine auch als Gierachse Z_{V} bezeichnete z-Achse in Fahrzeughochrichtung auf. Der Ursprung des vorgegebenen Fahrzeugkoordinatensystems befindet sich insbesondere in einem Schwerpunkt des Fahrzeugs 1. Das vorgegebene Fahrzeugkoordinatensystem ist insbesondere bezüglich einer Karosserie des Fahrzeugs 1 fixiert vorgegeben. Die Gierachse Z_{V} verläuft insbesondere parallel zu einem Normalenvektor eines Kabinenbodens und Kabinendachs des Fahrzeugs 1 nach oben. Die Wankachse X_{V} verläuft insbesondere parallel zur Fahrzeuglängsachse und somit senkrecht zum Normalenvektor des Kabinenbodens und Kabinendachs des Fahrzeugs 1. Die Nickachse Y_{V} verläuft insbesondere parallel zur Fahrzeugquerachse und somit senkrecht zum Normalenvektor des Kabinenbodens und Kabinendachs des Fahrzeugs 1.

Tatsächlich werden mit der Inertialmesseinheit 2 dreidimensionale Komponenten der Beschleunigung des Fahrzeugs 1 in einem Sensorkoordinatensystem der Inertialmesseinheit 2 gemessen. Das Sensorkoordinatensystem weist eine x-Achse X, eine y-Achse Y und eine Z-Achse Z auf. Das Sensorkoordinatensystem weist, beispielsweise aufgrund von Einbautoleranzen und/oder Herstellungstoleranzen, eine Fehlorientierung gegenüber dem vorgegebenen Fahrzeugkoordinatensystem auf, d. h. es ist gegenüber dem Fahrzeugkoordinatensystem verdreht. Mit anderen Worten: das Sensorkoordinatensystem ist gegenüber der Nickachse Y_{V} des Fahrzeugs 1 um einen statischen Nickwinkel *Φ* verdreht, gegenüber der Wankachse X_{V} des Fahrzeugs 1 um einen statischen Wankwinkel *Θ* verdreht und gegenüber der Gierachse Z_{V} des Fahrzeugs 1 um einen statischen Gierwinkel Ψ verdreht.

Im Verfahren wird, insbesondere mittels der Vorrichtung, insbesondere mittels der Verarbeitungseinheit der Vorrichtung, eine Fehlorientierung einer zwischen der x-Achse X und der y-Achse Y des Sensorkoordinatensystems aufgespannten Ebene gegenüber einer zwischen der Wankachse X_{V} und der Nickachse Y_{V} des Fahrzeugkoordinatensystems aufgespannten Ebene ermittelt, d. h. es werden die Fehlorientierung des Sensorkoordinatensystems gegenüber der Wankachse X_{V} und gegenüber der Nickachse Y_{V} des Fahrzeugkoordinatensytems und somit der statische Wankwinkel *Θ* und der statische Nickwinkel *Φ* ermittelt. Anhand dieser Winkel *Θ*, *Φ* werden dann mittels einer Koordinatentransformation im Sensorkoordinatensystem erfasste Messwerte MW der Inertialmesseinheit 2 in das Fahrzeugkoordinatensystem umgerechnet. Durch diese Umrechnung wird die Inertialmesseinheit 2 auf das Fahrzeugkoordinatensystem kalibriert.

Die Ermittlung der Fehlorientierung, d. h. des statischen Nickwinkels *Φ* und des statischen Wankwinkels *Θ*, erfolgt während der Fahrt iterativ in mehreren Iterationsstufen IS1 bis ISn, wie in Figur 2 gezeigt.

Die jeweilige Iterationsstufe IS1 bis ISn erhält dabei als Input, d. h. als Eingangswerte, aktuelle Messewerte MW der Inertialmesseinheit 2, d. h. mittels der Inertialmesseinheit 2 ermittelte aktuelle Messwerte MW einer Längsbeschleunigung *a_{x,roh}* und einer Querbeschleunigung *a_{y,roh}* des Fahrzeugs 1, und zudem die Erdbeschleunigung g und zur Berechnung von Inertialkräften, insbesondere einer Corioliskraft, einer Zentripetalkraft und/oder einer Eulerkraft, erforderliche Zustandsdaten des Fahrzeugs 1, insbesondere eine Drehgeschwindigkeit des Fahrzeugs 1, eine Drehrate des Fahrzeugs 1, eine Geschwindigkeit des Fahrzeugs 1 und/oder Raddrehzahlen von Rädern des Fahrzeugs 1. Die Vorrichtung weist hierfür vorteilhafterweise entsprechende Sensoren auf. Diese Sensoren können beispielsweise bereits im Fahrzeug 1 vorhandene und insbesondere für andere Fahrzeuganwendungen vorgesehene Sensoren sein.

Zudem erhält die jeweilige Iterationsstufe IS1 bis ISn als Input, d. h. als Eingangswerte, Koeffizienten *Φ*₀, *Φ*₁, *Φ*₂, *Θ*₀, *Θ*₁, *Θ*₂ von vorgegebenen Polynomen, insbesondere von Polynomen erster oder zweiter Ordnung, die jeweils einen approximierten Zusammenhang zwischen der gemessenen Längsbeschleunigung *a_{x,roh}* und dem Nickwinkel *Φ* des Fahrzeugs 1 bzw. zwischen der gemessenen Querbeschleunigung *a_{y,roh}* und dem Wankwinkel *Θ* des Fahrzeugs 1 wiedergeben. Es handelt sich bei diesen Koeffizienten um Parameter P, die, ausgehend von vorgegebenen Startwerten, in den einzelnen Iterationsstufen IS1 bis ISn iterativ verfeinert werden. Die Startwerte sind somit die Parameter P, d. h. die Koeffizienten *Φ*₀, *Φ*₁, *Φ*₂, *Θ*₀, *Θ*₁, *Θ*₂, für die erste Iterationsstufe IS1.

In der jeweiligen Iterationsstufe IS1 bis ISn werden die Inertialkräfte berechnet und die Messwerte MW der Längsbeschleunigung *a_{x,roh}* und Querbeschleunigung *a_{y,roh}* von Beiträgen, die von der Erdbeschleunigung und von den Inertialkräften stammen, bereinigt.

Die Inertialkräfte umfassen die Corioliskraft, die Zentripetalkraft und die Eulerkraft und können mit den Messwerten eines Drehratensensors ermittelt werden. Die Gierrate, d. h. die Drehrate des Fahrzeugs 1, lässt sich alternativ auch aus Radgeschwindigkeiten und/oder aus den Raddrehzahlen der Räder des Fahrzeugs 1 herleiten. Die von der Erdbeschleunigung bereinigten Messwerte lassen sich mittels eines Kalmanfilters aus gemessenen Zustandsdaten des Fahrzeugs 1, insbesondere der Geschwindigkeit, Beschleunigung und/oder Drehrate, ermitteln. Die Erdbeschleunigung wird insbesondere mittels des Kalmanfilters berechnet. Anschließend kann diese von den Messwerten subtrahiert werden, um dadurch vorteilhafterweise die von der Erdbeschleunigung bereinigten Messwerte zu erhalten.

Des Weiteren werden in der jeweiligen Iterationsstufe IS1 bis ISn die Koeffizienten *Φ*₀, *Φ*₁, *Φ*₂, *Θ*₀, *Θ*₁, *Θ*₂ der Polynome mit den bereinigten Messwerten MW aktualisiert.

Die beschriebene Lösung beruht insbesondere auf der Idee, dass der Zusammenhang zwischen dem Nickwinkel *Φ* und der Längsbeschleunigung *a_{x,roh}* bzw. zwischen dem Wankwinkel *Θ* und der Querbeschleunigung *a_{y,roh}* des Fahrzeugs 1 in guter Näherung in Form von Polynomen angegeben werden kann: $Φ \left({a}_{x , roh}\right) = {Φ}_{0} + {Φ}_{1} ∗ {a}_{x , roh} + {Φ}_{2} ∗ {a}_{x , roh}^{2} + ⋯$ (1) $Θ \left({a}_{y , roh}\right) = {Θ}_{0} + {Θ}_{1} ∗ {a}_{y , roh} + {Θ}_{2} ∗ {a}_{y , roh}^{2} + ⋯$ (2)

Dabei stellen *Φ*₀, *Φ*₁, *Φ*₂, *Θ*₀, *Θ*₁, *Θ*₂ die Koeffizienten der Polynome *Φ*(*a*_{*x*,*roh*}), *Θ*(*a_{y,roh}*) dar und *a_{x,roh}, a_{y,roh}* stellen die unbereinigten Messwerte MW der Längs- bzw. Querbeschleunigung dar.

Für den Zweck der hier beschriebenen Lösung ist es ausreichend, Polynome zweiter Ordnung zu verwenden. Es werden daher für die Berechnungen folgende Polynome verwendet: $Φ \left({a}_{x , roh}\right) = {Φ}_{0} + {Φ}_{1} ∗ {a}_{x , roh} + {Φ}_{2} ∗ {a}_{x , roh}^{2}$ (3) $Θ \left({a}_{y , roh}\right) = {Θ}_{0} + {Θ}_{1} ∗ {a}_{y , roh} + {Θ}_{2} ∗ {a}_{y , roh}^{2}$ (4)

Denkbar ist aber auch die Verwendung von Polynomen erster Ordnung oder von Polynomen dritter oder höherer Ordnung.

Die Koeffizienten der Polynome werden in den einzelnen Iterationsstufen IS1 bis ISn, ausgehend von vorgegebenen Startwerten, iterativ optimiert, d. h. das System lernt schrittweise, welche Koeffizienten optimal sind. Dazu wird ein Fehlerwert wie folgt berechnet: ${a}_{z , err} = {a}_{z} - Φ \left({a}_{x , roh}\right) ∗ {a}_{x} - Θ \left({a}_{y , roh}\right) ∗ {a}_{y}$ (5)

Mit den verwendeten Polynomen zweiter Ordnung ergibt sich dann: $\begin{matrix}{a}_{z , err} = {a}_{z} - \left({Φ}_{0}+{Φ}_{1}∗{a}_{x , roh}+{Φ}_{2}∗{a}_{x , roh}^{2}\right) ∗ {a}_{x} \\ - \left({Θ}_{0}+{Θ}_{1}∗{a}_{y , roh}+{Θ}_{2}∗{a}_{y , roh}^{2}\right) ∗ {a}_{y}\end{matrix}$ (6)

Dabei stellen *a_{x,roh}, a_{y,roh}* die unbereinigten Messwerte MW der Längs- bzw. Querbeschleunigung dar und *aₓ, a_{y,}, a_{z}* die von der Erdbeschleunigung und den Inertialkräften bereinigten Messwerte der Beschleunigung dar.

Mit dem Fehlerwert *a_{z,err}* werden dann folgende Delta-Koeffizienten gebildet: ${ΔΦ}_{i} = {a}_{z , err} ∗ {{a}^{i}}_{x , roh} ∗ {a}_{x} ; i = 0 , 1 , 2$ (7) ${ΔΘ}_{i} = {a}_{z , err} ∗ {{a}^{i}}_{y , roh} ∗ {a}_{y} ; i = 0 , 1 , 2$ (8)

Anschließend werden die Koeffizienten der Polynome wie folgt aktualisiert: ${Φ}_{i} = {Φ}_{i} + {LR}_{{Φ}_{i}} ∗ {ΔΦ}_{i} ; i = 0 , 1 , 2$ (9) ${Θ}_{i} = {Θ}_{i} + {LR}_{{Θ}_{i}} ∗ {ΔΘ}_{i} ; i = 0 , 1 , 2$ (10) wobei *LR_{Φi}* , *LR_{Θi}* vorgegebene Update-Werte (Learning-Raten) sind.

Diese Aktualisierung der Koeffizienten wird vorzugsweise nur bei Fahrgeschwindigkeiten durchgeführt, die in einem vorgegebenen Geschwindigkeitsbereich liegen, beispielsweise im Bereich von 0 km/h bis 100 km/h.

In der jeweiligen Iterationsstufe IS1 bis ISn wird geprüft, ob die Koeffizienten nullter Ordnung *Φ*₀, *Θ*₀ der Polynome jeweils ein vorgegebenes Konvergenzkriterium erfüllen. Beispielsweise wird ermittelt, ob die maximale Abweichung zwischen den innerhalb eines vorgegebenen Zeitraums ermittelten Werten des Koeffizienten *Φ*₀ und die maximale Abweichung zwischen den innerhalb des vorgegebenen Zeitraums ermittelten Werten des Koeffizienten *Θ*₀ jeweils geringer als ein jeweiliger vorgegebener Grenzwert ist.

Wenn die Koeffizienten nullter Ordnung *Φ*₀, *Θ*₀ das jeweilige Konvergenzkriterium nicht erfüllen, werden die Koeffizienten *Φ*₀, *Φ*₁, *Φ*₂, *Θ*₀, *Θ*₁, *Θ*₂ der Polynome an die nächste Iterationsstufe IS2 bis ISn ausgegeben. Andernfalls, d. h. wenn die Koeffizienten nullter Ordnung *Φ*₀, *Θ*₀ das jeweilige Konvergenzkriterium erfüllen, werden die Iterationen beendet.

Bei Beendigung der Iterationen werden die Koeffizienten nullter Ordnung *Φ*₀, *Θ*₀ , d. h. die zuletzt ermittelten Werte der Koeffizienten nullter Ordnung *Φ*₀ und *Θ*₀, als die Ergebnisse der ermittelten Fehlorientierung des Sensorkoordinatensystems ausgegeben.

Diese ermittelten Werte der Koeffizienten nullter Ordnung *Φ*₀, *Θ*₀ entsprechen dem statischen Nickwinkel *Φ* bzw. dem statischen Wankwinkel *Θ* und stellen die Fehlorientierung des Sensorkoordinatensystems gegenüber der Nickachse Y_{V} bzw. Wankachse X_{V} des Fahrzeugkoordinatensystems dar.

Mit den ermittelten Fehlorientierungen, d. h. mit dem statischen Nickwinkel *Φ* und dem statischen Wankwinkel *Θ*, d. h. mit den zuletzt ermittelten Koeffizienten nullter Ordnung *Φ*₀, *Θ*₀, wird eine Koordinatentransformationsmatrix R wie folgt erstellt: $R = \left(\begin{matrix}cos \left({Θ}_{0}\right) & sin \left({Θ}_{0}\right) sin \left({Φ}_{0}\right) & sin \left({Θ}_{0}\right) cos \left({Φ}_{0}\right) \\ 0 & cos \left({Φ}_{0}\right) & - sin \left({Φ}_{0}\right) \\ - sin \left({Θ}_{0}\right) & cos \left({Θ}_{0}\right) sin \left({Φ}_{0}\right) & cos \left({Θ}_{0}\right) cos \left({Φ}_{0}\right)\end{matrix}\right)$ (11)

Mit der Koordinatentransformationsmatrix R werden die im Sensorkoordinatensystem ermittelten dreidimensionalen Komponenten der Beschleunigung in das Fahrzeugkoordinatensystem umgerechnet. Auf diese Weise wird die Inertialmesseinheit 2 kalibriert, d. h. Messfehler, die durch die Fehlorientierung des Sensorkoordinatensystems bedingt sind, werden kompensiert.

Das beschriebene Verfahren wird insbesondere nur durchgeführt, wenn kein großer statischer Nickwinkel *Φ* des Fahrzeugs 1 verschieden von der Ruhelage vorliegt, denn dieser würde in die Sensororientierung mit dazu gelernt werden. Beispielsweise werden Informationen eines hinteren Niveausensors und/oder anderer Fahrwerkskomponenten des Fahrzeugs 1 verwendet, um statische Nicksituationen, d. h. einen über einem vorgegebenen Grenzwert liegenden statischen Nickwinkel *Φ* des Fahrzeugs 1, zu erkennen und das Verfahren in solchen Phasen zu pausieren.

### Bezugszeichenliste

- 1: Fahrzeug
- 2: Inertialmesseinheit

- IS1 bis ISn: Iterationsstufe
- MW: Messwert
- P: Parameter

- X: x-Achse Sensorkoordinatensystem
- Y: y-Achse Sensorkoordinatensystem
- Z: z-Achse Sensorkoordinatensystem
- X_{V}: Wankachse
- Y_{V}: Nickachse
- Z_{V}: Gierachse

- *Θ*: Wankwinkel
- *Φ*: Nickwinkel
- Ψ: Gierwinkel

## Patentansprüche

1. Verfahren zur Ermittlung einer Fehlorientierung einer Inertialmesseinheit (2) eines Fahrzeugs (1), mittels welcher dreidimensionale Komponenten einer Beschleunigung des Fahrzeugs (1) in einem Sensorkoordinatensystem gemessen werden, wobei
- für das Fahrzeug (1) ein Fahrzeugkoordinatensystem vorgegeben ist, welches eine x-Achse in Fahrzeuglängsrichtung, eine y-Achse in Fahrzeugquerrichtung und eine z-Achse in Fahrzeughochrichtung aufweist,
- eine Fehlorientierung einer zwischen einer x-Achse (X) und einer y-Achse (Y) des Sensorkoordinatensystems aufgespannten Ebene gegenüber einer zwischen der x-Achse und der y-Achse des Fahrzeugkoordinatensystems aufgespannten Ebene ermittelt wird,
**dadurch gekennzeichnet, dass**
- die Ermittlung der Fehlorientierung während eines Fahrbetriebs des Fahrzeugs (1) iterativ in mehreren Iterationsstufen (IS1 bis ISn) erfolgt,
- die jeweilige Iterationsstufe (IS1 bis ISn) als Eingangswerte von der Inertialmesseinheit (2) ermittelte aktuelle Messwerte (MW) einer Längsbeschleunigung und einer Querbeschleunigung des Fahrzeugs (1), die Erdbeschleunigung, zur Berechnung von Inertialkräften erforderliche Zustandsdaten des Fahrzeugs (1) sowie Koeffizienten von vorgegebenen Polynomen, die jeweils einen approximierten Zusammenhang zwischen der gemessenen Längsbeschleunigung und einem Nickwinkel (*Φ*) des Fahrzeugs (1) bzw. zwischen der gemessenen Querbeschleunigung und einem Wankwinkel (*Θ*) des Fahrzeugs (1) wiedergeben, erhält,
- in der jeweiligen Iterationsstufe (IS1 bis ISn) die Inertialkräfte berechnet werden, die Messwerte (MW) der Längsbeschleunigung und Querbeschleunigung von Beiträgen, die von der Erdbeschleunigung und von den Inertialkräften stammen, bereinigt werden, die Koeffizienten der Polynome mit den bereinigten Messwerten der Längsbeschleunigung und Querbeschleunigung aktualisiert werden, und geprüft wird, ob die Koeffizienten nullter Ordnung der Polynome jeweils ein vorgegebenes Konvergenzkriterium erfüllen,
- die Koeffizienten der Polynome an die nächste Iterationsstufe (IS2 bis ISn) ausgegeben werden, wenn die Koeffizienten nullter Ordnung der Polynome das jeweilige vorgegebene Konvergenzkriterium nicht erfüllen,
- die Iterationen beendet werden, wenn die Koeffizienten nullter Ordnung der Polynome das jeweilige vorgegebene Konvergenzkriterium erfüllen, und
- bei Beendigung der Iterationen die Koeffizienten nullter Ordnung der Polynome als Ergebnisse der ermittelten Fehlorientierung des Sensorkoordinatensystems ausgegeben werden.

2. Verfahren nach Anspruch 1,
**dadurch gekennzeichnet, dass** die jeweilige Iterationsstufe (IS1 bis ISn) als zur Berechnung der Inertialkräfte erforderliche Zustandsdaten des Fahrzeugs (1) eine Drehgeschwindigkeit, eine Drehrate, eine Geschwindigkeit und/oder Raddrehzahlen erhält.

3. Verfahren nach einem der vorhergehenden Ansprüche,
**dadurch gekennzeichnet, dass** die jeweilige Iterationsstufe (IS1 bis ISn) Koeffizienten von vorgegebenen Polynomen erster oder zweiter Ordnung erhält.

4. Verfahren nach einem der vorhergehenden Ansprüche,
**dadurch gekennzeichnet, dass** als Inertialkräfte eine Corioliskraft, eine Zentripetalkraft und/oder eine Eulerkraft berechnet werden.

5. Verfahren nach einem der vorhergehenden Ansprüche,
**dadurch gekennzeichnet, dass** mit den Ergebnissen der ermittelten Fehlorientierung des Sensorkoordinatensystems eine Koordinatentransformationsmatrix erstellt wird, mit der die im Sensorkoordinatensystem ermittelten dreidimensionalen Komponenten der Beschleunigung in das Fahrzeugkoordinatensystem umgerechnet werden.

6. Fahrzeug (1), aufweisend:
- eine Inertialmesseinheit (2), und
- eine Vorrichtung, die ausgebildet und eingerichtet ist zur Durchführung eines Verfahrens nach einem der vorhergehenden Ansprüche.

7. Fahrzeug (1) nach Anspruch 6,
**dadurch gekennzeichnet, dass** die Vorrichtung oder zumindest eine Verarbeitungseinheit der Vorrichtung ein Bestandteil der Inertialmesseinheit (2) ist.

8. Fahrzeug (1) nach Anspruch 6 oder 7,
**dadurch gekennzeichnet, dass** die Vorrichtung Sensoren zur Ermittlung der Erdbeschleunigung und/oder der zur Berechnung der Inertialkräfte erforderlichen Zustandsdaten des Fahrzeugs (1) aufweist.

## Claims

1. Method for determining a misalignment of an inertial measurement unit (2) of a vehicle (1), by means of which three-dimensional components of an acceleration of the vehicle (1) are measured in a sensor coordinate system, wherein
- a vehicle coordinate system which has an x-axis in the longitudinal direction of the vehicle, a y-axis in the lateral direction of the vehicle and a z-axis in the vertical direction of the vehicle, is specified for the vehicle (1),
- a misalignment of a plane stretching between an x-axis (X) and a y-axis (Y) of the sensor coordinate system is determined with respect to a plane stretching between the x-axis and the y-axis of the vehicle coordinate system,
**characterized in that**
- the misalignment is determined iteratively in multiple iteration stages (IS1 to ISn) during driving operation of the vehicle (1),
- as input values the respective iteration stage (IS1 to ISn) receives present measurement values (MW) of a longitudinal acceleration and a lateral acceleration of the vehicle (1) determined by the inertial measurement unit (2), the gravitational acceleration, state data relating to the vehicle (1) required for calculating inertial forces, and coefficients of predefined polynomials each representing an approximate relationship between the measured longitudinal acceleration and a pitch angle (Φ) of the vehicle (1) or between the measured lateral acceleration and a roll angle (θ) of the vehicle (1),
- in the respective iteration stage (IS1 to ISn), the inertial forces are calculated, the measurement values (MW) of the longitudinal acceleration and lateral acceleration are adjusted to remove contributions originating from the gravitational acceleration and from the inertial forces, the coefficients of the polynomials are updated with the adjusted measurement values of the longitudinal acceleration and lateral acceleration, and a check is performed to determine whether the zero-order coefficients of the polynomials each satisfy a predefined convergence criterion,
- the coefficients of the polynomials are output to the next iteration stage (IS2 to ISn) when the zero-order coefficients of the polynomials do not satisfy the respective predefined convergence criterion,
- the iterations are terminated when the zero-order coefficients of the polynomials meet the respective predefined convergence criterion, and,
- when the iterations are terminated, the zero-order coefficients of the polynomials are output as results of the determined misalignment of the sensor coordinate system.

2. Method according to Claim 1,
**characterized in that**, as state data relating to the vehicle (1) required for calculating the inertial forces, the respective iteration stage (IS1 to ISn) receives a rotational speed, a rate of rotation, a speed and/or wheel rotational speeds.

3. Method according to either of the preceding claims,
**characterized in that** the respective iteration stage (IS1 to ISn) receives coefficients of predefined polynomials of the first or second order.

4. Method according to any one of the preceding claims,
**characterized in that** a Coriolis force, a centripetal force and/or an Euler force are calculated as inertial forces.

5. Method according to any one of the preceding claims,
**characterized in that** the results of the determined misalignment of the sensor coordinate system are used to create a coordinate transformation matrix, which is used to convert the three-dimensional components of the acceleration determined in the sensor coordinate system into the vehicle coordinate system.

6. Vehicle (1), comprising:
- an inertial measurement unit (2), and
- a device designed and set up to carry out a method according to any one of the preceding claims.

7. Vehicle (1) according to Claim 6,
**characterized in that** the device or at least a processing unit of the device is a constituent part of the inertial measurement unit (2).

8. Vehicle (1) according to Claim 6 or 7,
**characterized in that** the device has sensors for determining the gravitational acceleration and/or the state data relating to the vehicle (1) required for calculating the inertial forces.

## Revendications

1. Procédé de détermination d'un défaut d'orientation d'une unité de mesure inertielle (2) d'un véhicule (1), au moyen de laquelle des composantes tridimensionnelles d'une accélération du véhicule (1) sont mesurées dans un système de coordonnées de capteur,
- un système de coordonnées de véhicule étant prédéfini pour le véhicule (1), lequel comporte un axe x dans le sens longitudinal de véhicule, un axe y dans le sens transversal de véhicule et un axe z dans le sens vertical de véhicule,
- un défaut d'orientation d'un plan formé entre un axe x (X) et un axe y (y) du système de coordonnées de capteur étant déterminé par rapport à un plan formé entre l'axe x et l'axe y du système de coordonnées de véhicule,
**caractérisé en ce que**
- le défaut d'orientation est déterminé de manière itérative en plusieurs étapes d'itération (IS1 à ISn) pendant une opération de conduite du véhicule (1),
- chaque étape d'itération (IS1 à ISn) reçoit en tant que valeurs d'entrée de l'unité de mesure inertielle (2) des valeurs de mesure (MW) instantanées déterminées d'une accélération longitudinale et d'une accélération transversale du véhicule (1), l'accélération gravitationnelle, des données d'état du véhicule (1) requises pour le calcul de forces d'inertie ainsi que des coefficients de polynômes prédéfinis, qui reproduisent chacun une relation approximative entre l'accélération longitudinale mesurée et un angle de tangage (Φ) du véhicule (1) ou entre l'accélération transversale mesurée et un angle de roulis (θ) du véhicule (1),
- les forces d'inertie sont calculées dans l'étape d'itération (IS1 à ISn) respective, les valeurs de mesure (MW) de l'accélération longitudinale et de l'accélération transversale sont corrigées par des contributions provenant de l'accélération gravitationnelle et des forces d'inertie, les coefficients des polynômes sont mis à jour avec les valeurs de mesure corrigées de l'accélération longitudinale et de l'accélération transversale, et il est vérifié si les coefficients d'ordre zéro des polynômes remplissent chacun un critère de convergence prédéfini,
- les coefficients des polynômes sont délivrés à l'étape d'itération suivante (IS2 à ISn) lorsque les coefficients d'ordre zéro des polynômes ne remplissent pas le critère de convergence prédéfini respectif,
- les itérations sont terminées lorsque les coefficients d'ordre zéro des polynômes remplissent le critère de convergence prédéfini respectif, et
- à la fin des itérations, les coefficients d'ordre zéro des polynômes sont délivrés en tant que résultats du défaut d'orientation déterminé du système de coordonnées de capteur.

2. Procédé selon la revendication 1,
**caractérisé en ce que** chaque étape d'itération (IS1 à ISn) reçoit une vitesse de rotation, une vitesse de rotation, un taux de rotation, une vitesse et/ou des vitesses de rotation de roue en tant que données d'état du véhicule (1) requises pour le calcul des forces d'inertie.

3. Procédé selon l'une des revendications précédentes,
**caractérisé en ce que** l'étape d'itération (IS1 à ISn) respective reçoit des coefficients de polynômes prédéfinis du premier ordre ou du deuxième ordre.

4. Procédé selon l'une des revendications précédentes,
**caractérisé en ce qu'**une force de Coriolis, une force centripète et/ou une force d'Euler sont calculées en tant que forces d'inertie.

5. Procédé selon l'une des revendications précédentes,
**caractérisé en ce qu'**est créée, avec les résultats du défaut d'orientation déterminé du système de coordonnées de capteur, une matrice de transformation de coordonnées, avec laquelle les composantes tridimensionnelles de l'accélération déterminée dans le système de coordonnées de capteur sont converties en le système de coordonnées de véhicule.

6. Véhicule (1), comportant :
- une unité de mesure inertielle (2), et
- un dispositif, qui est formé et mis au point pour la mise en œuvre d'un procédé selon l'une des revendications précédentes.

7. Véhicule (1) selon la revendication 6,
**caractérisé en ce que** le dispositif ou au moins une unité de traitement du dispositif fait partie intégrante de l'unité de mesure inertielle (2).

8. Véhicule (1) selon la revendication 6 ou 7,
**caractérisé en ce que** le dispositif comporte des capteurs pour déterminer l'accélération gravitationnelle et/ou les données d'état du véhicule (1) requises pour le calcul des forces d'inertie.
